(19) Europäisches Patentamt
European Patent Office
Office européen des brevets

(11) EP 4 693 520 A1

(12) EUROPEAN PATENT APPLICATION
published in accordance with Art. 153(4) EPC

(43) Date of publication:
**11.02.2026 Bulletin 2026/07**

(21) Application number: **24779169.2**

(22) Date of filing: **05.03.2024**

(51) International Patent Classification (IPC):
***H01M 4/66*** *(2006.01)* ***H01M 4/13*** *(2010.01)*
***H01M 4/62*** *(2006.01)*

(52) Cooperative Patent Classification (CPC):
**H01M 4/13; H01M 4/62; H01M 4/66;** Y02E 60/10

(86) International application number:
**PCT/JP2024/008291**

(87) International publication number:
**WO 2024/203031 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.03.2023 JP 2023055710**

(71) Applicant: **Kureha Corporation**
**Chuo-ku**
**Tokyo 103-8552 (JP)**

(72) Inventors:
- **SATO, Hiroshi**
**Tokyo 103-8552 (JP)**
- **YAMAKAWA, Yuichiro**
**Tokyo 103-8552 (JP)**
- **OKADA, Kayoko**
**Tokyo 103-8552 (JP)**

(74) Representative: **Zimmermann & Partner Patentanwälte mbB**
**P.O. Box 330 920**
**80069 München (DE)**

# (54) CURRENT COLLECTOR, PRODUCTION METHOD FOR SAME, ELECTRODE, AND BATTERY

(57) An object is to provide a current collector in which cracks and the like hardly occur in a mixture layer at the time of preparing an electrode. The current collector achieving the object described above is a current collector including: a substrate containing a metal, and a coating layer arranged on at least one surface of the substrate, the coating layer containing a conductive auxiliary, a vinylidene fluoride copolymer, and a dispersant, the vinylidene fluoride copolymer containing a structural unit derived from vinylidene fluoride and a structural unit derived from a carboxy group-containing compound, an amount of the conductive auxiliary being 45 mass% or more and 80 mass% or less with respect to a total mass of the coating layer.



Processed by Luminess, 75001 PARIS (FR)

## Description

### TECHNICAL FIELD

The present invention relates to a current collector, a method for producing the current collector, an electrode, and a battery.

### BACKGROUND ART

Lithium ion secondary batteries are widely used in various electronic devices, electric vehicles, and the like. An electrode of the lithium ion secondary battery generally includes a current collector and a mixture layer disposed on the current collector, and the mixture layer contains an active material and a binder.

In recent years, there has been a demand for increasing the capacity of the lithium ion secondary battery, and for example, attempts have been made to increase the capacity of a lithium ion secondary battery by charging at a high voltage. Thus, it has also been studied to form a current collector including a substrate and a layer having electrical conductivity (hereinafter, also referred to as "coating layer") on the substrate to reduce electrical resistance at an interface between the current collector and the mixture layer. Patent Document 1 describes a current collector made of a laminate of aluminum foil and a coating layer containing an acrylic acid-modified poly(vinylidene fluoride) and an electric conductor.

### CITATION LIST

### PATENT DOCUMENT

Patent Document 1: CN 113725398 A

### SUMMARY OF INVENTION

### TECHNICAL PROBLEM

However, as a result of diligent research, the inventors of the present invention found that cracks readily occur in a mixture layer when the mixture layer is formed on a coating layer of a current collector described in Patent Document 1.

An object of the present invention is to provide a current collector in which cracks hardly occur in a mixture layer at the time of preparing an electrode, a method for producing the current collector, an electrode including the current collector, and a battery.

### SOLUTION TO PROBLEM

[1] The present invention provides a current collector including:

a substrate containing a metal, and
a coating layer arranged on at least one surface of the substrate,
the coating layer containing a conductive auxiliary, a vinylidene fluoride copolymer, and a dispersant,
the vinylidene fluoride copolymer containing a structural unit derived from vinylidene fluoride and a structural unit derived from a carboxy group-containing compound, and
an amount of the conductive auxiliary being 45 mass% or more and 80 mass% or less with respect to a total mass of the coating layer.

[2] The present invention provides the current collector according to [1], wherein the carboxy group-containing compound is a compound represented by General Formula (1) below.

[Chem. 1]

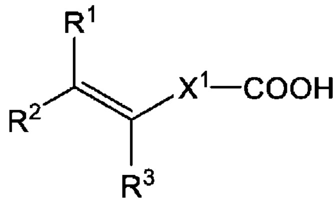

· · · · · (1)

In General Formula (1), $R^1$ represents a hydrogen atom, an alkyl group having 1 or more and 5 or less carbons, or $-C(=O)-OC_nH_{2n+1}$ (n is 1 or more or 5 or less), $R^2$ and $R^3$ each independently represent a hydrogen atom or an alkyl group having 1 or more and 5 or less carbons, and $X^1$ represents a single bond or a divalent atomic group having a main chain containing 1 or more and 20 or less atoms and a molecular weight of 500 or less.

[3] The present invention provides the current collector according to [1] or [2], wherein the vinylidene fluoride copolymer of the coating layer contains the structural unit derived from vinylidene fluoride and a structural unit derived from acrylic acid and/or a structural unit derived from monomethyl maleate.

[4] The present invention provides the current collector according to any one of [1] to [3], wherein the dispersant is at least one type of compound selected from the group consisting of polyvinylpyrrolidone, polyvinyl alcohol, methyl cellulose, hydroxypropyl methylcellulose, and N-methylethanolamine.

[5] The present invention provides the current collector according to any one of [1] to [4], wherein an amount of the dispersant is 0.2 mass% or more with respect to the total mass of the coating layer.

[6] The present invention provides an electrode including: the current collector described in any one of [1] to [5], and a mixture layer arranged on the coating layer of the current collector, the mixture layer containing an active material and a binder.

[7] The present invention provides the electrode according to [6], wherein the binder contains a structural unit derived from vinylidene fluoride.

[8] The present invention provides a battery including the electrode described in [6] above.

Furthermore, the present invention provides an electrode including: the current collector described above, and a mixture layer arranged on the coating layer of the current collector, the mixture layer containing an active material and a binder.

[9] The present invention provides a method for producing a current collector, the method including:

applying a coating liquid containing a conductive auxiliary, a vinylidene fluoride copolymer, a dispersant, and a solvent onto at least one surface of a substrate containing a metal,
the vinylidene fluoride copolymer containing a structural unit derived from vinylidene fluoride and a structural unit derived from a carboxy group-containing compound, and
an amount of the conductive auxiliary being 45 mass% or more and 80 mass% or less with respect to a total amount of a solid content of the coating liquid.

[10] The present invention provides the method for producing a current collector according to [9], wherein the carboxy group-containing compound is a compound represented by General Formula (1) below.

[Chem. 2]

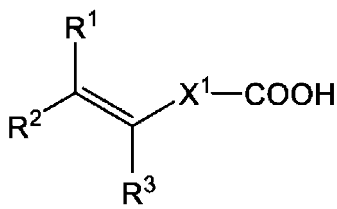

· · · · · (1)

In General Formula (1),

$R^1$ represents a hydrogen atom, an alkyl group having 1 or more and 5 or less carbons, or $-C(=O)-OC_nH_{2n+1}$ (n is 1 or more or 5 or less),
$R^2$ and $R^3$ each independently represent a hydrogen atom or an alkyl group having 1 or more and 5 or less

carbons, and

$X^1$ represents a single bond or a divalent atomic group having a main chain containing 1 or more and 20 or less atoms and a molecular weight of 500 or less.

## ADVANTAGEOUS EFFECTS OF INVENTION

In the current collector of the present invention, when a mixture layer is formed on the current collector, cracks hardly occur in the mixture layer. Therefore, the current collector and the electrode including the current collector are suitable as members of various lithium ion secondary batteries.

## DESCRIPTION OF EMBODIMENTS

1. Current collector

The current collector according to an embodiment of the present invention is a current collector for use in a lithium ion secondary battery and the like and includes a substrate containing a metal and a coating layer having a predetermined composition and arranged on at least one surface of the substrate. Typically, the current collector is used by forming a mixture layer on the coating layer of the current collector.

In the current collector described in Patent Document 1 as described above, that is, a current collector including a substrate and a coating layer arranged on the substrate and containing an acrylic acid-modified polyvinylidene fluoride (vinylidene fluoride copolymer obtained by copolymerization of acrylic acid and vinylidene fluoride) and a small amount of electric conductor, when a mixture layer is formed on the coating layer, cracks readily occur on a surface of the mixture layer. The reason for this is uncertain but is considered as follows.

The vinylidene fluoride copolymer, which is obtained by copolymerization of acrylic acid and vinylidene fluoride and used for the coating layer described above, remarkably readily aggregates at the time of mixing with an electric conductor, and uniform formation of the coating layer is difficult. Presumably, this aggregation is attributed to the fact that a structural unit derived from vinylidene fluoride and a carboxy group derived from acrylic acid are arranged close to each other.

Meanwhile, the mixture layer arranged on the coating layer typically contains a vinylidene fluoride-based polymer. Thus, a mixture slurry for forming the mixture layer often contains a good solvent having a high affinity for the vinylidene fluoride copolymer in the coating layer. When such a mixture slurry is applied to the coating layer, the vinylidene fluoride copolymer in the coating layer is eluted into the good solvent in the mixture slurry. When the eluted vinylidene fluoride copolymer cures again, shrinkage of the coating layer occurs along with crystallization of the vinylidene fluoride copolymer. As a result, it is considered that deformation tends to occur inside the mixture layer arranged on the coating layer, and cracks occur on the surface of the mixture layer.

On the other hand, in the coating layer according to an embodiment of the present invention, although a vinylidene fluoride copolymer containing a structural unit derived from vinylidene fluoride and a structural unit derived from a carboxy group-containing compound (e.g., compound represented by General Formula (1) described below) is contained, an amount of a conductive auxiliary with respect to the total mass of the coating layer is 45 mass% or more and 80 mass% or less. Thus, when a mixture slurry is applied onto the coating layer, even when the vinylidene fluoride copolymer described above is eluted to a good solvent in the mixture slurry, the conductive auxiliary physically suppresses transfer of the vinylidene fluoride copolymer, and thus deformation hardly occurs in the mixture layer described above. Furthermore, by addition of the dispersant, aggregation of the aforementioned conductive auxiliary and the vinylidene fluoride copolymer can be suppressed. Thus, it is considered that an uneven part is less likely to be formed in the coating layer formed on the substrate, and deformation of the coating layer itself is also suppressed. As a result, deformation in the mixture layer formed on the coating layer of the current collector hardly occurs, and cracks hardly occur. Hereinafter, a configuration of the current collector of the present invention will be described in detail.

(1) Substrate

The substrate has a configuration serving as a base of the current collector, and the substrate only needs to have sufficient electrical conductivity and contain a metal. The substrate may contain only a metal, or may contain a material other than metals (for example, resins, ceramics, and the like). The substrate is more preferably composed only of a metal. Here, the type of metal contained in the substrate is appropriately selected according to the type, shape, and the like of the current collector (and thus a battery). The substrate may contain only one type of metal or may contain two or more types of metals. Examples of the metal contained in the substrate include aluminum, copper, iron, stainless steel, steel, nickel, and titanium.

Furthermore, the shape of the substrate is appropriately selected according to the type, size, and the like of the

current collector (and thus the battery). The substrate may be, for example, foil or mesh of the metal described above. In addition, the substrate may be a material produced by stacking the metal foil, the metal mesh, or the like on a surface of a material other than metals.

(2) Coating layer

The coating layer only needs to contain at least a predetermined amount of a conductive auxiliary, a vinylidene fluoride copolymer having a predetermined structure, and a dispersant and may contain an additional component as necessary.

- Conductive auxiliary

The conductive auxiliary plays a role of electrically conducting the substrate and the active material in the mixture layer. As the conductive auxiliary, a known conductive auxiliary can be used. Specific examples of the conductive auxiliary include acetylene black, Ketjen Black, carbon black, graphite powder, graphene, carbon nanofibers, carbon nanotubes, carbon fibers, and metal powder. The coating layer may contain only one type of conductive auxiliary or may contain two or more types of the conductive auxiliaries.

The amount of the conductive auxiliary in the coating layer only needs to be 45.0 mass% or more and 80.0 mass% or less, and is preferably 47.0 mass% or more and 75.0 mass% or less, and more preferably 49.5 mass% or more and 65.0 mass% or less, with respect to the total mass of the coating layer. When the amount of the conductive auxiliary in the coating layer is 45 mass% or more as described above, cracks and the like hardly occur in the mixture layer formed on the current collector (coating layer). On the other hand, when the amount of the conductive auxiliary in the coating layer is 80 mass% or less, adhesive strength between the current collector and the mixture layer tends to be enhanced.

Vinylidene fluoride copolymer

The vinylidene fluoride copolymer contains a structural unit derived from vinylidene fluoride and a structural unit derived from a carboxy group-containing compound. The coating layer may contain only one type of the vinylidene fluoride copolymer or may contain two or more types of the vinylidene fluoride copolymers.

The amount of the structural unit derived from vinylidene fluoride in the vinylidene fluoride copolymer is preferably 90.0 mol% or more and 99.99 mol% or less, more preferably 93.0 mol% or more and 99.98 mol% or less, and particularly preferably 96.0 mol% or more and 99.97 mol% or less, with respect to the amount (mol) of all structural units constituting the vinylidene fluoride copolymer. When the amount of the structural unit derived from vinylidene fluoride is 90.0 mol% or more, properties derived from vinylidene fluoride, for example, electrochemical stability is easily achieved in the coating layer. The amount of the structural unit derived from vinylidene fluoride in the vinylidene fluoride copolymer can be identified by $^{19}F$-NMR.

Furthermore, although the carboxy group-containing compound is not particularly limited, an example thereof is a compound represented by General Formula (1) below. The compound represented by General Formula (1) is described below as an example but the structure of the carboxy group-containing compound is not limited thereto. The vinylidene fluoride-based polymer may contain only one type of the structural units derived from the compound represented by General Formula (1) below or two or more types of the structural units derived from the compound represented by General Formula (1).

[Chem. 3]

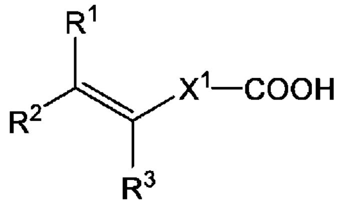

· · · · · (1)

In General Formula (1) above, $R^1$ represents a hydrogen atom, an alkyl group having 1 or more and 5 or less carbons, or $-C(=O)-OC_nH_{2n+1}$ (n is 1 or more or 5 or less). Among these, $R^1$ is preferably a hydrogen atom, a methyl group, or $-C(=O)-OCH_3$ from the viewpoint of polymerization reactivity.

$R^2$ and $R^3$ each independently represent a hydrogen atom or an alkyl group having 1 or more and 5 or less carbons, and from the viewpoint of polymerization reactivity, a substituent with small steric hindrance is preferred, hydrogen or an alkyl group having 1 or more and 3 or less carbons is preferred, and hydrogen or a methyl group is preferred.

$X^1$ represents a single bond or a divalent atomic group having a main chain containing 1 or more and 20 or less atoms and a molecular weight of 500 or less. The number of atoms of the main chain of $X^1$ is the number of atoms constituting the shortest chain connecting the terminal carboxy group in General Formula (1) above and a carbon-carbon double bond. The number of atoms of the main chain is more preferably 15 or less.

As long as the atomic group represented by $X^1$ above has a molecular weight of 500 or less and satisfies the number of atoms of the main chain as described above, the structure thereof is not particularly limited, and may be linear or branched, or may contain a ring structure. Examples of the structure constituting the atomic group include an alkylene group, a carbonyl group (-C(=O)-), an ether bond (-O-), an aromatic ring, and an alicyclic structure.

Specific examples of the compound represented by General Formula (1) above include monomethyl maleate (MMM), acrylic acid (AA), methacrylic acid, carboxymethyl acrylate, carboxymethyl methacrylate, 2-carboxyethyl acrylate, 2-carboxyethyl methacrylate, acryloyloxyethyl succinic acid, methacryloyloxyethyl succinic acid, acryloyloxyethyl phthalic acid, methacryloyloxyethyl phthalic acid, acryloyloxypropyl succinic acid, and methacryloyloxypropyl succinic acid. Among these, acrylic acid or monomethyl maleate is preferred.

The amount of the structural unit derived from the carboxy group-containing compound (e.g., compound represented by General Formula (1)) in the vinylidene fluoride copolymer described above is preferably 0.01 mol% or more and 10.0 mol% or less, more preferably 0.02 mol% or more and 7.0 mol% or less, and particularly preferably 0.03 mol% or more and 4.0 mol% or less, with respect to the amount (mol) of all structural units constituting the vinylidene fluoride copolymer. Note that, when the amount of the structural unit derived from the carboxy group-containing compound (e.g., compound represented by General Formula (1)) is 0.01 mol% or more, adhesiveness between the coating layer and the mixture layer or the substrate tends to be further enhanced. On the other hand, when the amount thereof is 10.0 mol% or less, the amount of the structural unit derived from vinylidene fluoride relatively increases, electrochemical stability of the vinylidene fluoride copolymer and thus electrochemical stability of the coating layer tend to be good. The amount of the structural unit derived from the carboxy group-containing compound (e.g., compound represented by General Formula (1)) can be analyzed by $^{19}$F-NMR, $^{1}$H-NMR, and the like.

Furthermore, the vinylidene fluoride copolymer may contain a structural unit derived from a compound (hereinafter, also referred to as "additional compound") other than vinylidene fluoride and other than the structural unit derived from the carboxy group-containing compound (e.g., compound represented by General Formula (1)) in the range that does not impair the object and effect of the present invention. However, the amount (total amount) of structural unit(s) derived from the additional compound(s) with respect to the amount (mol) of all structural units contained in the vinylidene fluoride copolymer is preferably 10.0 mol% or less, and more preferably 4.0 mol% or less. When the amount of the structural unit(s) derived from the additional compound(s) in the vinylidene fluoride copolymer is 10.0 mol% or less, the electrochemical stability of the coating layer is improved, and the adhesive strength between the coating layer and the substrate tends to be enhanced. The amount of structural unit(s) derived from the additional compound(s) can be analyzed by $^{19}$F-NMR, $^{1}$H-NMR, and the like.

Examples of such an additional compound include fluorine-based compounds other than vinylidene fluoride, such as vinyl fluoride, trifluoroethylene, tetrafluoroethylene, chlorotrifluoroethylene, hexafluoropropylene, hexafluoroethylene, fluoroalkyl vinyl ether, and perfluoromethyl vinyl ether.

Here, the inherent viscosity of the vinylidene fluoride copolymer is preferably 1.0 or more, more preferably 1.3 dL/g or more, and even more preferably 2.0 dL/g or more. When the inherent viscosity is as described above, the adhesive strength between the coating layer and the substrate and the adhesive strength between the coating layer and the mixture layer formed on the coating layer are easily increased. The inherent viscosity can be measured by the following method. First, the viscosity is measured by dissolving 80 mg of the vinylidene fluoride copolymer in 20 mL of N,N-dimethylformamide, and using an Ubbelohde viscometer in a 30°C thermostatic bath. Subsequently, based on the measured value, the inherent viscosity ($\eta_i$) of the vinylidene fluoride copolymer is calculated by the following equation.

$$\eta_i = (1/C) \cdot \ln(\eta/\eta_0)$$

In the equation described above, $\eta$ is a viscosity of the solution, $\eta_0$ is a viscosity of N,N-dimethylformamide alone, which is a solvent, and C is a concentration of the vinylidene fluoride copolymer, that is, 0.4 g/dL.

The method for preparing the vinylidene fluoride copolymer described above is not particularly limited, and vinylidene fluoride and the structural unit derived from the carboxy group-containing compound (e.g., compound represented by General Formula (1)) and, as necessary, an additional compound may be polymerized by a known method. Examples of the polymerization method include suspension polymerization, emulsion polymerization, and

solution polymerization.

The amount of the vinylidene fluoride copolymer in the coating layer is preferably 10.0 mass% or more and 54.8 mass% or less, more preferably 15.0 mass% or more and 52.8 mass% or less, and even more preferably 25.0 mass% or more and 50.3 mass% or less, with respect to the total mass of the coating layer. When the amount of the vinylidene fluoride copolymer is in this range, the electrochemical stability of the coating layer tends to be enhanced, and adhesiveness between the coating layer and the substrate and adhesiveness between the current collector and the mixture layer tend to be enhanced. Furthermore, the amount of the vinylidene fluoride copolymer is preferably 25 parts by mass or more and 122 parts by mass or less, and more preferably 53.8 parts by mass or more and 102 parts by mass or less, with respect to 100 parts by mass of the conductive auxiliary described above. When the ratio of the amount of the vinylidene fluoride copolymer to the amount of the conductive auxiliary is in this range, cracks even less likely to occur in the mixture layer formed on the current collector layer. Furthermore, when the ratio of the amount of the vinylidene fluoride copolymer to the amount of the conductive auxiliary is in the range described above, adhesiveness between the current collector and the mixture layer tends to be even better.

- Dispersant

The dispersant in the present description only needs to be a compound that can suppress aggregation of the vinylidene fluoride copolymer and the conductive auxiliary described above, and examples thereof include a vinyl-based copolymer, a cellulose-based compound, and an alcohol amine. When the coating layer contains a dispersant as described above, cracks hardly occur in the mixture layer formed on the current collector (coating layer), and good adhesiveness between the coating layer and the mixture layer is achieved. The coating layer may contain only one type of dispersant or may contain two or more types of dispersants.

Specific examples of the vinyl-based copolymer described above include polyvinylpyrrolidone and polyvinyl alcohol. Furthermore, examples of the cellulose-based compound described above include methyl cellulose and hydroxypropyl methylcellulose. Furthermore, the alcohol amine only needs to be a compound in which one or more alkyl alcohol is bonded to a nitrogen atom of an amine, and examples thereof include N-methylethanolamine. That is, preferred examples of the dispersant described above include polyvinylpyrrolidone, polyvinyl alcohol, methyl cellulose, hydroxypropyl methylcellulose, and N-methylethanolamine.

The dispersant may be a liquid at room temperature or may be a solid; however, a dispersant having good miscibility with N-methyl-2-pyrrolidone is more preferred.

The amount of the dispersant is preferably 0.2 mass% or more and 10.0 mass or less, and more preferably 0.4 mass% or more and 10.0 mass% or less, with respect to the total mass of the coating layer. When the amount of the dispersant is in this range, cracks are even less likely to occur in the mixture layer formed on the current collector layer (coating layer).

- Others

The coating layer may contain an additional component besides the conductive auxiliary, the vinylidene fluoride copolymer, and the dispersant described above in the range that does not impair the object and effect of the present invention. Examples of the additional component include phosphorus compounds, sulfur compounds, organic acids, and nitrogen compounds such as amine compounds and ammonium compounds; organic esters, silane-based, titanium-based, and aluminum-based coupling agents; and resins such as polytetrafluoroethylene (PTFE), styrene-butadiene rubber (SBR), and polyacrylonitrile (PAN). However, the amount of the additional component is preferably 10 mass% or less, and more preferably 5 mass% or less, with respect to the total mass of the coating layer.

- Physical properties of coating layer

The coating layer only needs to be disposed on one surface of the substrate described above, and may be formed on both surfaces. In addition, the coating layer may be arranged in a pattern on one surface of the substrate, and it is preferable that the coating layer be arranged so as to entirely cover one surface or both surfaces of the substrate from the viewpoint of easily suppressing cracking of the mixture layer or reducing electrical resistance between the mixture layer and the substrate.

The thickness of the coating layer on at least one surface of the substrate is preferably 0.5 μm or more and 10 μm or less, and more preferably 0.8 μm or more and 5 μm or less. When the thickness of the coating layer is 0.5 μm or more, the adhesive strength between the coating layer and the mixture layer tends to be good. In contrast, when the thickness of the coating layer is 10 μm or less, an energy density of the battery including the current collector can be increased.

(3) Method for producing current collector

The method for producing a current collector of an embodiment of the present invention is not particularly limited as long as it is a method capable of forming a coating layer on the substrate described above, and is preferably a method including applying a coating liquid onto at least one surface of the substrate (hereinafter, this is also referred to as "application step") and drying the coating liquid (hereinafter, this is also referred to as "drying step"). Each step will be described below.

- Application step

The coating liquid applied in the application step only needs to contain at least the conductive auxiliary, the vinylidene fluoride copolymer, the dispersant, and the organic solvent described above and may contain an additional component as necessary. The conductive auxiliary, the vinylidene fluoride copolymer, the dispersant, and the additional component are as described above.

Meanwhile, the organic solvent contained in the coating liquid only needs to be capable of uniformly dispersing or dissolving the conductive auxiliary, the vinylidene fluoride copolymer, and the dispersant described above. Examples of the organic solvent include amide compounds, such as dimethylformamide, N,N-dimethylacetamide, and N-methylpyrrolidone; alcohols, such as methanol, ethanol, isopropyl alcohol, 2-ethyl-1-hexanol, 1-nonanol, lauryl alcohol, and tripropylene glycol; amine compounds, such as o-toluidine, m-toluidine, and p-toluidine; 1-ethyl-3-methylimidazolium bis(trifluoromethylsulfonyl) imide; lactones, such as $\gamma$-butyrolactone and $\delta$-butyrolactone; and sulfoxide and sulfone compounds, such as dimethyl sulfoxide and sulfolane. The coating liquid may contain only one type of the organic solvent or two or more types of the organic solvents. Among them, N-methylpyrrolidone is preferable in that the vinylidene fluoride copolymer described above can be easily dissolved.

The amount of the organic solvent is appropriately selected according to the type of the organic solvent, the desired viscosity of the coating liquid, and the like, and is typically preferably 1000 parts by mass or more and 10000 parts by mass or less, and more preferably 3000 parts by mass or more and 7000 parts by mass or less, with respect to 100 parts by mass of the total amount of the conductive auxiliary and the vinylidene fluoride copolymer described above.

The method of applying the coating liquid onto the substrate is not particularly limited, and a doctor blade method, a reverse roll method, a comma bar method, a gravure method, an air knife method, a die coating method, a dip coating method, or the like can be employed.

- Drying step

After the coating liquid described above is applied, the coating liquid is heated at an appropriate temperature to volatilize the organic solvent, and thus to produce a coating layer. The heating temperature is not particularly limited, and in one example, the heating temperature is preferably 60°C or higher, and more preferably 80°C or higher. The upper limit value is appropriately selected according to the type of the coating liquid. The heating may be performed multiple times at different temperatures. The drying step may be performed under any environment of atmospheric pressure, pressure, and reduced pressure.

2. Electrode

The electrode of an embodiment of the present invention includes the current collector described above and a mixture layer containing an active material and a binder, and the mixture layer is disposed on the current collector. The mixture layer only needs to contain an active material and a binder, and the type thereof is not particularly limited; however, the binder preferably contains a vinylidene fluoride homopolymer or a vinylidene fluoride-based polymer containing a structural unit derived from vinylidene fluoride, and a structural unit derived from hexafluoropropylene and/or a structural unit derived from a compound represented by General Formula (2) below. Hereinafter, each configuration of the electrode will be described.

- Active material

The active material contained in the mixture layer may be a positive electrode active material or a negative electrode active material, and is appropriately selected according to the application.

Examples of the negative electrode active material include a carbon material, such as artificial graphite, natural graphite, non-graphitizable carbon, graphitizable carbon, activated carbon, and a material prepared by carbonizing a phenolic resin, a pitch, and the like by heat treatment; metal and metal alloy materials, such as Cu, Li, Mg, B, Al, Ga, In, Si, Ge, Sn, Pb, Sb, Bi, Cd, Ag, Zn, Hf, Zr, and Y; and metal oxides, such as SiO, $SiO_2$, GeO, $GeO_2$, SnO, $SnO_2$, PbO, $PbO_2$, and

$Li_4Ti_5O_{12}$ (LTO). The negative electrode active material may be a material in which these surfaces are coated, and one type thereof may be used alone, or two or more types thereof may be contained. Note that the negative electrode active material may be a commercially available product.

Meanwhile, examples of the positive electrode active material include a lithium-based positive electrode active material, and examples thereof include a lithium metal oxide represented by General Formula (a) below and a material prepared by coating the surface thereof.

$LiM_xO_2$ ... (a)

In General Formula (a), M represents at least one metal element including Ni, and the metal element other than Ni is preferably selected from the group consisting of Co, Al, Fe, Mn, Cr, and V. In addition to Ni, it is more preferable to further contain one type of metal or two or more types of metals selected from the group consisting of Co, Mn, and Al. In the lithium metal oxide represented by Formula (a) above, when the total amount of the metal elements constituting M is 100 mol%, Ni is contained preferably in an amount of 55 mol% or more, and more preferably in an amount of 70% or more.

In General Formula (a) above, $0.5 \leq x \leq 1.5$ is satisfied, and $0.7 \leq x \leq 1.3$ is more preferably satisfied.

Examples of the composition of the lithium-based positive electrode active material represented by General Formula (a) above and other lithium-based positive electrode active materials include $Li_{1.0}Ni_{0.8}Co_{0.2}O_2$, $Li_{1.0}Ni_{0.5}Mn_{0.5}O_2$, $Li_{1.00}Ni_{0.35}Co_{0.34}Mn_{0.34}O_2$ (NCM111), $Li_{1.00}Ni_{0.52}Co_{0.20}Mn_{0.30}O_2$ (NCM523), $Li_{1.00}Ni_{0.50}Co_{0.30}Mn_{0.20}O_2$ (NCM532), $Li_{1.00}Ni_{0.6}Co_{0.2}Mn_{0.2}O_2$ (NCM622), $Li_{1.00}Ni_{0.83}Co_{0.12}Mn_{0.05}O_2$ (NCM811), $Li_{1.00}Ni_{0.85}Co_{0.15}Al_{0.05}O_2$ (NCA811), $LiCoO_2$ (LCO), $LiMn_2O_4$ (LMO), $LiFePO_4$ (LFP), $LiMnPO_4$ (LMP), and $LiMn_{1-x}Fe_xPO_4$ (LFMP). The positive electrode active material may be a material in which these surfaces are coated, and one type thereof may be used alone, or two or more types thereof may be contained. Note that the positive electrode active material may be a commercially available product.

An amount of the active material contained in the mixture layer is appropriately selected according to the type thereof, the function of the electrode, the type of the battery, and the like, and is not particularly limited, and in one example, the amount is preferably 50.0 mass% or more and 99.9 mass% or less with respect to the total amount of the mixture layer. When the content of the active material is in the range described above, a sufficient charge/discharge capacity can be achieved and good battery performance can be readily achieved, for example.

- Binder

The binder contained in the mixture layer is not particularly limited as long as the binder can bind the active material described above, and as described above, the binder preferably contains a vinylidene fluoride homopolymer or the vinylidene fluoride copolymer containing the structural unit derived from vinylidene fluoride, and the structural unit derived from hexafluoropropylene and/or the structural unit derived from the compound represented by General Formula (2) below (hereinafter, also referred to as "vinylidene fluoride-based polymer A"). The binder may contain only the vinylidene fluoride homopolymer, only the vinylidene fluoride-based polymer A, or both of them. In a case where the binder contains the vinylidene fluoride-based polymer A, the binder may contain only one type of the vinylidene fluoride-based polymer A, or two or more types of the vinylidene fluoride-based polymers A.

The vinylidene fluoride homopolymer that can be used as a binder is the same as a known vinylidene fluoride homopolymer. The method for preparing the vinylidene fluoride homopolymer is not particularly limited, and vinylidene fluoride may be polymerized by a known method. Examples of the polymerization method include suspension polymerization, emulsion polymerization, and solution polymerization.

Meanwhile, the vinylidene fluoride-based polymer A only needs to be a polymer containing the structural unit derived from vinylidene fluoride and the structural unit derived from hexafluoropropylene and/or the structural unit derived from the compound represented by General Formula (2). The vinylidene fluoride-based polymer A may be, for example, a copolymer of vinylidene fluoride and hexafluoropropylene, a copolymer of vinylidene fluoride and the compound represented by General Formula (2), or a copolymer of vinylidene fluoride, hexafluoropropylene, and a compound represented by General Formula (2). The vinylidene fluoride-based polymer A may contain another copolymerization component as long as the object and effect of the present invention are not impaired.

The amount of the structural unit derived from vinylidene fluoride in the vinylidene fluoride-based polymer A is preferably 50 mol% or more, more preferably 60 mol% or more, and particularly preferably 80 mol% or more, with respect to the amount (mol) of all structural units constituting the vinylidene fluoride-based polymer A. When the amount of the structural unit derived from vinylidene fluoride is 50 mol% or more, properties derived from vinylidene fluoride, for example, the electrochemical stability is easily achieved. The amount of the structural unit derived from vinylidene fluoride in the vinylidene fluoride-based polymer A can be identified by $^{19}F$-NMR.

Meanwhile, the amount of the structural unit derived from hexafluoropropylene in the vinylidene fluoride-based polymer A is more preferably 10 mol% or less with respect to the amount (mol) of all the structural units constituting the vinylidene fluoride-based polymer A. When the amount of the structural unit derived from hexafluoropropylene is in the range described above, the melting point of the vinylidene fluoride-based polymer A tends to fall within a desired range, and the adhesive strength between the vinylidene fluoride-based polymer A and the above-described active material or the like is increased. The amount of the structural unit derived from hexafluoropropylene in the vinylidene fluoride-based polymer A can be identified by $^{19}F$-NMR.

Next, General Formula (2) will be shown below. The vinylidene fluoride-based polymer A may contain only one type of the structural units derived from the compound represented by General Formula (2) below or two or more types of the structural units derived from the compound represented by General Formula (2).

[Chem. 4]

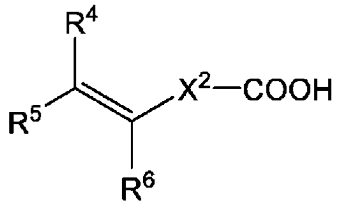

(2)

In General Formula (2) above, $R^4$ represents a hydrogen atom, an alkyl group having 1 or more and 5 or less carbons, or $-C(=O)-OC_nH_{2n+1}$ (n is 1 or more or 5 or less). Among them, $R^4$ is preferably a hydrogen atom, a methyl group, or $-C(=O)-OCH_3$ from the viewpoint of polymerization reactivity.

$R^5$ and $R^6$ each independently represent a hydrogen atom or an alkyl group having 1 or more and 5 or less carbons, and from the viewpoint of polymerization reactivity, a substituent with small steric hindrance, hydrogen or an alkyl group having 1 or more and 3 or less carbons, and hydrogen or a methyl group are preferable.

In addition, $X^2$ in General Formula (2) represents a single bond or a divalent atomic group having a main chain containing 1 or more and 20 or less atoms and having a molecular weight of 500 or less. The number of atoms of the main chain of $X^2$ is the number of atoms constituting the shortest chain connecting the terminal carboxy group in General Formula (2) and a carbon-carbon double bond. The number of atoms of the main chain is more preferably 15 or less.

As long as the atomic group represented by $X^2$ has a molecular weight of 500 or less and satisfies the number of atoms of the main chain as described above, the structure thereof is not particularly limited, and may be linear, branched, or may contain a ring structure. Examples of the structure constituting the atomic group include an alkylene group, a carbonyl group (-C(=O)-), an ether bond (-O-), an aromatic ring, and an alicyclic structure.

Specific examples of the compound represented by General Formula (2) above include monomethyl maleate (MMM), acrylic acid (AA), methacrylic acid, carboxymethyl acrylate, carboxymethyl methacrylate, 2-carboxyethyl acrylate, 2-carboxyethyl methacrylate, acryloyloxyethyl succinic acid, methacryloyloxyethyl succinic acid, acryloyloxyethyl phthalic acid, methacryloyloxyethyl phthalic acid, acryloyloxypropyl succinic acid, and methacryloyloxypropyl succinic acid.

The amount of the structural unit derived from the compound represented by General Formula (2) above is preferably 0.01 mol% or more and 10 mol% or less, more preferably 0.02 mol% or more and 7 mol% or less, and particularly preferably 0.03 mol% or more and 4 mol% or less, with respect to the amount (mol) of all structural units constituting the vinylidene fluoride-based polymer A. When the amount of the structural unit derived from the compound represented by General Formula (2) is 0.01 mol% or more, the adhesive strength between the binder and the active material and the adhesive strength between the mixture layer and the coating layer are increased. In contrast, when the amount of the structural unit derived from the compound represented by General Formula (2) is 10 mol% or less, the amount of the structural unit derived from vinylidene fluoride relatively increases, and the electrochemical stability of the mixture layer tends to be good. The amount of the structural unit derived from the compound represented by General Formula (2) above in the vinylidene fluoride-based polymer A can be analyzed by $^{19}F$-NMR, $^{1}H$-NMR, and the like.

As described above, the vinylidene fluoride-based polymer A may contain a structural unit derived from a compound other than vinylidene fluoride, hexafluoropropylene, and the compound represented by General Formula (2) (hereinafter, also referred to as "additional compound") in some parts in the range that does not impair the object and effect of the present invention. Specific examples of additional compounds include the additional compounds mentioned in the description of the vinylidene fluoride copolymer of the coating layer described above. The amount of structural units derived from additional compounds is preferably 10 mol% or less with respect to the amount (mol) of all structural units

constituting the vinylidene fluoride-based polymer A. When the amount of the structural units derived from additional compounds in the vinylidene fluoride-based polymer A is 10 mol% or less, the electrochemical stability of the mixture layer is easily improved, and the adhesive strength between the mixture layer and the coating layer is easily improved. The amount of structural units derived from additional compounds can be analyzed by $^{19}$F-NMR, $^{1}$H-NMR, and the like.

The method for preparing the vinylidene fluoride-based polymer A described above is not particularly limited, and vinylidene fluoride and hexafluoropropylene and/or the compound represented by General Formula (2) above and, as necessary, the additional compound(s) may be polymerized by a known method. Examples of the polymerization method include suspension polymerization, emulsion polymerization, and solution polymerization.

The amount of the binder in the mixture layer is appropriately selected according to the composition of the binder, the function of the electrode, the type of the battery, and the like, and is not particularly limited, and in one example, the amount is preferably 0.1 mass% or more and 50 mass% or less with respect to the total amount of the mixture layer. When the amount of the binder is in the range, the adhesive strength between the mixture layer and the coating layer is improved. Since the amount of the active material is relatively sufficient, a sufficient charge/discharge capacity can be provided, and improved battery performance is readily achieved.

- Others

The mixture layer may contain a known dispersant, an adhesive aid, a thickener, and the like in the range that does not impair the object and effect of the present invention. Examples thereof further include phosphorus compounds, sulfur compounds, organic acids, and nitrogen compounds such as amine compounds and ammonium compounds; organic esters, various silane-based, titanium-based, and aluminum-based coupling agents; and resins such as polytetrafluoroethylene (PTFE), styrene-butadiene rubber (SBR), and polyacrylonitrile (PAN). However, the total amount thereof is preferably 15 mass% or less with respect to the total amount of the mixture layer.

- Method for forming mixture layer

The mixture layer can be formed by applying a mixture slurry containing the above-described active material, a binder, if necessary, additional components, and an organic solvent onto the coating layer of the above-described current collector by a known method, and drying the mixture slurry by a known method. The organic solvent contained in the mixture slurry is the same as the organic solvent used for the coating liquid described above.

3. Electrode

The current collector and the electrode described above can be used for various lithium ion secondary batteries and the like, and may be used for other applications.

**EXAMPLES**

Hereinafter, specific examples of the present invention will be described together with comparative examples, but the present invention is not limited to these.

1. Preparation of Materials

The following conductive auxiliary, vinylidene fluoride copolymer, and dispersant were each prepared.

Conductive auxiliary

- Super-P, available from Timcal Japan

Vinylidene fluoride copolymer

- VDF/AA1: Vinylidene fluoride-acrylic acid copolymer (prepared in Preparation Example 1 described below)
- VDF/AA2: Vinylidene fluoride-acrylic acid copolymer (prepared in Preparation Example 2 described below)
- VDF/MMM: Vinylidene fluoride-monomethyl maleate copolymer (prepared in Preparation Example 3 described

below)

- VDF/AES: Vinylidene fluoride-acryloyloxyethyl succinic acid (prepared in Preparation Example 4 described below)
- PVDF: Vinylidene fluoride homopolymer (prepared in Preparation Example 5 described below)

Preparation Example 1

In an autoclave with an internal volume of 2 liters, 900 g of ion-exchanged water, 0.4 g of hydroxypropyl methylcellulose, 3.1 g of t-butyl peroxypivalate, 396 g of vinylidene fluoride, and an initial addition amount of 0.2 g of acrylic acid were placed, and the mixture was heated to 50°C. A 0.7 wt.% acrylic acid aqueous solution containing acrylic acid was continuously supplied to a reaction vessel under a condition of maintaining a constant pressure during polymerization. The obtained polymer slurry was dehydrated and dried to obtain a vinylidene fluoride copolymer (VDF/AA1). A total of 3.52 g of acrylic acid was added, including the initially added amount. The inherent viscosity measured by the method described below was 2.5 dL/g.

Preparation Example 2

In an autoclave with an internal volume of 2 liters, 900 g of ion-exchanged water, 0.4 g of hydroxypropyl methylcellulose, 2.0 g of t-butyl peroxypivalate, 396 g of vinylidene fluoride, and an initial addition amount of 0.2 g of acrylic acid were placed, and the mixture was heated to 50°C. A 0.7 wt.% acrylic acid aqueous solution containing acrylic acid was continuously supplied to a reaction vessel under a condition of maintaining a constant pressure during polymerization. The obtained polymer slurry was dehydrated and dried to obtain a vinylidene fluoride copolymer (VDF/AA2). A total of 3.08 g of acrylic acid was added, including the initially added amount. The inherent viscosity measured by the method described below was 3.1 dL/g.

Preparation Example 3

In an autoclave with an internal volume of 2 liters, 1084 g of ion-exchanged water, 0.63 g of Metolose SM-100 (available from Shin-Etsu Chemical Co., Ltd.), 3.81 g of a 50 wt.% diisopropyl peroxydicarbonate-HFE-347pc-f solution, 414 g of vinylidene fluoride (VDF), and 4.2 g of monomethyl maleate (MMM) were placed, and the temperature was raised to 29°C over a period of 1 hour. Subsequently, polymerization was performed while the temperature was maintained at 29°C. The obtained polymer slurry was dehydrated and dried to obtain a vinylidene fluoride copolymer (VDF/MMM). The inherent viscosity measured by the method described below was 2.1 dL/g.

Preparation Example 4

In an autoclave with an internal volume of 2 liters, 1092 g of ion-exchanged water, 0.2 g of Metolose 90SH-100 (available from Shin-Etsu Chemical Co., Ltd.), 3.6 g of a 50 mass% diisopropyl peroxydicarbonate-HFE-347pc-f solution, 5.3 g of ethyl acetate, 423 g of vinylidene fluoride, and an initial addition amount of 0.2 g of acryloyloxyethyl succinic acid (AES) were placed, and the temperature was raised to 26°C over a period of 1 hour. Subsequently, a 5 mass% acryloyloxyethyl succinic acid aqueous solution was gradually added at a rate of 0.6 g/min while the temperature was maintained at 26°C. The obtained polymer slurry was dehydrated and dried to obtain a vinylidene fluoride copolymer (VDF/AES). A total of 4.2 g of acryloyloxyethyl succinic acid was added, including the amount added initially. The inherent viscosity measured by the method described below was 1.8 dL/g.

Preparation Example 5

In an autoclave with an internal volume of 2 liters, 1085 g of ion-exchanged water, 0.2 g of Metolose SM-100 (available from Shin-Etsu Chemical Co., Ltd.), 1.3 g of a 50 wt.% diisopropyl peroxydicarbonate-HFE-347pc-f solution, 2.1 g of ethyl acetate, and 424 g of vinylidene fluoride (VDF) were placed, and the temperature was raised to 26°C over a period of 1 hour. Subsequently, polymerization was performed while the temperature was maintained at 26°C. The resulting polymer slurry was dehydrated and dried, and thus a vinylidene fluoride homopolymer (PVDF) was obtained. The inherent viscosity measured by the method described below was 3.1 dL/g.

Dispersant

- PVP: Polyvinylpyrrolidone

- PVA: Polyvinyl alcohol
- Methyl cellulose
- HPMC: Hydroxypropyl methylcellulose
- N-methylethanolamine

2. Preparation of electrode

Example 1

- Preparation of coating layer

The vinylidene fluoride copolymer (VDF/AA1) prepared in Preparation Example 1 was dissolved in N-methyl-2 -pyrrolidone (hereinafter, also referred to as "NMP"), and thus a polymer solution containing 6 mass% of the vinylidene fluoride copolymer (VDF/AA1) was prepared. Thereafter, a conductive auxiliary (Super-P, available from Timcal Japan), dispersant (PVP), and NMP were added to the polymer solution, and a coating liquid having a solid content concentration of 4% was prepared. The mass ratio of the conductive auxiliary (Super-P) and the vinylidene fluoride copolymer (VDF/AA1) in the coating liquid was 50:50. Furthermore, the amount of the dispersant (PVP) was 1 mass% with respect to the total amount of the vinylidene fluoride copolymer and the conductive auxiliary. The resulting coating liquid was applied onto an aluminum foil (substrate) having a thickness of 15 μm as a current collector using a TH-C type coater available from Thank-Metal Co., Ltd. and dried, and thus a coating layer having a weight per unit area of approximately 0.7 $g/m^2$ was formed.

- Preparation of mixture layer

The vinylidene fluoride homopolymer (PVDF) prepared in Preparation Example 5 was dissolved in NMP, and a polymer solution containing 6 mass% of the vinylidene fluoride homopolymer was prepared. Thereafter, a CNT (carbon tube) dispersion (NMP solution containing 4.3 mass% of Multi-Walled CNT (MWCNT) having a tube diameter of 7 nm and a specific surface area of 300 $m^2/g$) as the conductive auxiliary and NMP were added to the polymer solution, and kneaded. Subsequently, a positive electrode active material LFP (lithium iron phosphate; primary particle size: D50: 2 μm; specific surface area: 19.9 $m^2/g$) was added so that the solid content concentration was 55 mass%. The mixture was then kneaded, and a mixture slurry was prepared. The mass ratio of the positive electrode active material (LFP), the conductive auxiliary (CNT), and the vinylidene fluoride homopolymer in the mixture slurry was 100:2:2 in this order. The resulting mixture slurry was applied onto the coating layer described above using a TH-C type coater available from Thank-Metal Co., Ltd. and dried, and thus a mixture layer having a weight per unit area of approximately 150 $g/m^2$ was formed. The weight per unit area of the mixture layer was approximately 150 $g/m^2$.

Examples 2 to 11 and Comparative Examples 1 to 6

Each electrode was produced in the same manner as in Example 1 except that the type and amount of the vinylidene fluoride (co)polymer in the coating liquid used for formation of the coating layer and the type and amount of the dispersant were changed as listed in Table 1.

3. Evaluation

Various physical properties were measured and evaluated as follows.

• Measurement Method for Inherent Viscosity of Vinylidene Fluoride (Co)polymer

The inherent viscosity of the vinylidene fluoride (co)polymer described above was measured as follows. First, the viscosity was measured by dissolving 80 mg of the vinylidene fluoride (co)polymer in 20 mL of N,N-dimethylformamide, and using an Ubbelohde viscometer in a 30°C thermostatic bath. Subsequently, based on the obtained value, the inherent viscosity ($\eta_i$) of the vinylidene fluoride (co)polymer was calculated by the following equation.

$$\eta_i = (1/C) \cdot \ln(\eta/\eta_0)$$

In the equation, $\eta$ is a viscosity of the solution, $\eta_0$ is a viscosity of N,N-dimethylformamide alone, which is a solvent, and C is a concentration of the vinylidene fluoride polymer, that is, 0.4 g/dL.

- Electrode state

After the formation of the mixture layer, the mixture layer was visually observed, and evaluated as C when cracking was observed, as B when slight cracking was observed, and as A when no cracking was observed. When the electrode was pressed by a roll press and the electrode density was adjusted to 2.3 g/$cm^3$, the cracking of the mixture layer of the evaluation result of B was repaired and no longer observed. In contrast, in the mixture layer of the evaluation result of C, cracking was not repaired even when roll pressing was similarly performed.

- Peel Strength Measurement

After the roll pressing, the peel strength between the mixture layer and the coating layer was measured for the electrodes in which no cracking was observed (those of the evaluation results of A and B). The electrode was cut into a size having a length of 50 mm and a width of 20 mm, and a 90 degree peel test was conducted at a head speed of 10 mm/min using a tensile tester ("STB-1225S", available from A&D Company, Limited) in accordance with JIS K 6854-1 to measure the peel strength (gf/mm). Note that a case where the current collector peeled off from the mixture layer before the measurement was expressed as "peeled off".

[Table 1]

| | Coating layer | | | | | | | Mixture layer condition | Peel strength of mixture layer (gf/mm) |
|---|---|---|---|---|---|---|---|---|---|
| | Vinylidene fluoride copolymer | | | Conductive auxiliary | | Dispersant | | | |
| | Type | Inherent viscosity (dl/g) | Amount (mass%) | Type | Amount (mass%) | Type | Amount (mass%) | | |
| Example 1 | Preparation Example 1 | 2.5 | 49.5 | Super-P | 49.5 | PVP | 1.0 | A | 2.5 |
| Example 2 | Preparation Example 1 | 2.5 | 29.7 | Super-P | 69.3 | PVP | 1.0 | A | 2.0 |
| Example 3 | Preparation Example 2 | 3.1 | 49.5 | Super-P | 49.5 | PVP | 1.0 | A | 4.6 |
| Example 4 | Preparation Example 3 | 2.1 | 49.5 | Super-P | 49.5 | PVP | 1.0 | A | 1.1 |
| Example 5 | Preparation Example 1 | 2.5 | 49.8 | Super-P | 49.8 | PVP | 0.4 | A | 2.6 |
| Example 6 | Preparation Example 1 | 2.5 | 49.95 | Super-P | 49.95 | PVP | 0.1 | B | 2.9 |
| Example 7 | Preparation Example 4 | 1.8 | 49.5 | Super-P | 49.5 | PVP | 1.0 | A | 0.7 |
| Example 8 | Preparation Example 1 | 2.5 | 49.5 | Super-P | 49.5 | PVA | 10 | A | 2.1 |
| Example 9 | Preparation Example 1 | 2.5 | 49.5 | Super-P | 49.5 | Methyl cellulose | 1.0 | A | 2.9 |
| Example 10 | Preparation Example 1 | 2.5 | 49.5 | Super-P | 49.5 | HPMC | 1.0 | A | 2.8 |
| Example 11 | Preparation Example 1 | 2.5 | 49.5 | Super-P | 49.5 | N-methylethanolamine | 1.0 | A | 1.8 |
| Comparative Example 1 | Preparation Example 1 | 2.5 | 500 | Super-P | 50.0 | - | - | C | - |
| Comparative Example 2 | Preparation Example 3 | 2.1 | 50.0 | Super-P | 50.0 | - | - | C | - |
| Comparative Example 3 | Preparation Example 5 | 3.1 | 49.5 | Super-P | 49.5 | PVP | 1.0 | A | Peeled off |
| Comparative Example 4 | Preparation Example 1 | 2.5 | 69.3 | Super-P | 29.7 | PVP | 1.0 | C | - |
| Comparative Example 5 | Preparation Example 1 | 2.5 | 594 | Super-P | 39.6 | PVP | 1.0 | C | - |
| Comparative Example 6 | Preparation Example 1 | 2.5 | 14.9 | Super-P | 84.1 | PVP | 1.0 | A | Peeled off |

As shown in Table 1 above, in a case where the coating layer contained no dispersant or in a case where the amount of the conductive auxiliary in the coating layer was too small (less than 45 mass% with respect to the total mass of the coating layer), cracking occurred on the mixture layer surface (Comparative Examples 1, 2, 4, and 5). It is conceived that this is because the coating layer shrank when the coating layer was partially dissolved due to the good solvent in the mixture slurry and hardened again during formation of the mixture layer.

Meanwhile, in a case where the type of the vinylidene fluoride polymer was a vinylidene fluoride homopolymer, although cracking was less likely to occur on the mixture layer surface, peeling at the interface between the current collector and the coating layer readily occurred (Comparative Example 3). It is conceived that this is because the adhesion between the component in the coating layer and the current collector was weak in a case where the coating layer was a vinylidene fluoride homopolymer. Furthermore, in a case where the amount of the conductive auxiliary in the coating layer was too large (a case where the amount was more than 80 mass% with respect to the total mass of the coating layer), cracking was less likely to occur in the mixture layer surface, but the mixture layer was easily peeled off (Comparative Example 6). It is conceived that this is because adhesion between the coating layer (current collector) and the mixture layer was difficult due to a small amount of the resin component in the coating layer.

On the other hand, in a case where the coating layer contained the conductive auxiliary, the aforementioned vinylidene fluoride copolymer having the structural unit derived from the carboxy group-containing compound (compound represented by General Formula (1)), and the dispersant, and the amount of the conductive auxiliary with respect to the total mass of the coating layer was 45 mass% or more and 80 mass% or less (Examples 1 to 11), cracking was less likely to occur in the mixture layer, and the adhesiveness between the mixture layer and the coating layer (current collector) was good. It is conceived that aggregation of the vinylidene fluoride copolymer described above was suppressed when the conductive auxiliary was contained in a predetermined range and the dispersant was also contained. It is also conceived that the coating layer (current collector) and the mixture layer were more easily adhered when the amount of the conductive auxiliary was set to 80 mass% or less.

The present application claims priority to Japanese patent application No. 2023-055710 filed on March 30, 2023. The contents described in the specification of the foregoing application are all incorporated in the specification of the present application by reference.

## INDUSTRIAL APPLICABILITY

In the current collector of an embodiment of the present invention, when a mixture layer is formed on the current collector to form an electrode, cracking hardly occurs on the surface of the electrode, and a high-quality electrode or battery can be manufactured. Therefore, the current collector is very useful for manufacturing a lithium ion secondary battery and the like.

## Claims

**1.** A current collector comprising:

a substrate containing a metal, and
a coating layer arranged on at least one surface of the substrate,
the coating layer containing a conductive auxiliary, a vinylidene fluoride copolymer, and a dispersant,
the vinylidene fluoride copolymer containing a structural unit derived from vinylidene fluoride and a structural unit derived from a carboxy group-containing compound, and
an amount of the conductive auxiliary being 45 mass% or more and 80 mass% or less with respect to a total mass of the coating layer.

**2.** The current collector according to claim 1, wherein

the carboxy group-containing compound is a compound represented by General Formula (1):

[Chem. 1]

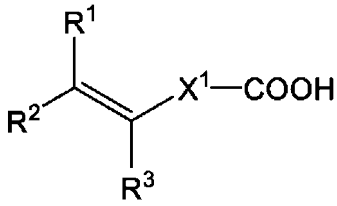

· · · · · (1)

where, in General Formula (1),
$R^1$ represents a hydrogen atom, an alkyl group having 1 or more and 5 or less carbons, or $-C(=O)-OC_nH_{2n+1}$ (n is 1 or more or 5 or less),
$R^2$ and $R^3$ each independently represent a hydrogen atom or an alkyl group having 1 or more and 5 or less carbons, and
$X^1$ represents a single bond or a divalent atomic group having a main chain containing 1 or more and 20 or less atoms and a molecular weight of 500 or less.

3. The current collector according to claim 1, wherein the vinylidene fluoride copolymer of the coating layer contains the structural unit derived from vinylidene fluoride and a structural unit derived from acrylic acid and/or a structural unit derived from monomethyl maleate.

4. The current collector according to any one of claims 1 to 3, wherein the dispersant is at least one type of compound selected from the group consisting of polyvinylpyrrolidone, polyvinyl alcohol, methyl cellulose, hydroxypropyl methylcellulose, and N-methylethanolamine.

5. The current collector according to any one of claims 1 to 3, wherein an amount of the dispersant is 0.2 mass% or more with respect to the total mass of the coating layer.

6. An electrode comprising:

the current collector described in any one of claims 1 to 3, and
a mixture layer arranged on the coating layer of the current collector,
the mixture layer containing an active material and a binder.

7. The electrode according to claim 6, wherein the binder contains a structural unit derived from vinylidene fluoride.

8. A battery comprising the electrode described in claim 6.

9. A method for producing a current collector, the method comprising:

applying a coating liquid containing a conductive auxiliary, a vinylidene fluoride copolymer, a dispersant, and a solvent onto at least one surface of a substrate containing a metal,
the vinylidene fluoride copolymer containing a structural unit derived from vinylidene fluoride and a structural unit derived from a carboxy group-containing compound, and
an amount of the conductive auxiliary being 45 mass% or more and 80 mass% or less with respect to a total amount of a solid content of the coating liquid.

10. The method for producing a current collector according to claim 9, wherein

the carboxy group-containing compound is a compound represented by General Formula (1):

[Chem. 2]

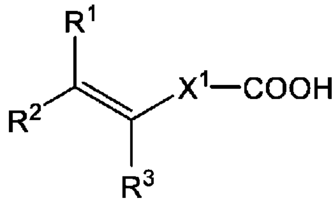

· · · · · (1)

where, in General Formula (1),
$R^1$ represents a hydrogen atom, an alkyl group having 1 or more and 5 or less carbons, or $-C(=O)-OC_nH_{2n+1}$ (n is 1 or more or 5 or less),
$R^2$ and $R^3$ each independently represent a hydrogen atom or an alkyl group having 1 or more and 5 or less carbons, and
$X^1$ represents a single bond or a divalent atomic group having a main chain containing 1 or more and 20 or less atoms and a molecular weight of 500 or less.

## INTERNATIONAL SEARCH REPORT

International application No. **PCT/JP2024/008291**

**A. CLASSIFICATION OF SUBJECT MATTER**

***H01M 4/66***(2006.01)i; ***H01M 4/13***(2010.01)i; ***H01M 4/62***(2006.01)i
FI: H01M4/66 A; H01M4/13; H01M4/62 Z

According to International Patent Classification (IPC) or to both national classification and IPC

**B. FIELDS SEARCHED**

Minimum documentation searched (classification system followed by classification symbols)

H01M4/66; H01M4/13; H01M4/62

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-48014 A (SHOWA DENKO K.K.) 25 March 2021 (2021-03-25) claims, comparative examples 13-2 | 1-10 |
| A | JP 2015-204221 A (UACJ CORP.) 16 November 2015 (2015-11-16) | 1-10 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/008291**

| Patent document cited in search report | Publication date (day/month/year) | Patent family member(s) | Publication date (day/month/year) |
|---|---|---|---|
| JP 2021-48014 A | 25 March 2021 | (Family: none) | |
| JP 2015-204221 A | 16 November 2015 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 113725398 A
- JP 2023055710 A